Europäisches Patentamt

European Patent Office

Office européen des brevets

(11) Publication number : **0 472 294 A1**

## EUROPEAN PATENT APPLICATION

(21) Application number : 91306754.2

(22) Date of filing : 24.07.91

(51) Int. Cl.⁵ : **H02J 7/32**

(30) Priority : **25.07.90 GB 9016353**

(43) Date of publication of application :
**26.02.92 Bulletin 92/09**

(84) Designated Contracting States :
**AT BE CH DE DK ES FR GB IT LI NL SE**

(71) Applicant : **CSIR**
**Corporate Building, Scientia**
**Pretoria Transvaal Province (ZA)**

(72) Inventor : **Szewczuk, Stefan**
**34 Stonehaven Street, Paulshof**
**Sandton, Transvaal Province (ZA)**
Inventor : **van Wyk, Albertus Japie**
**Plot 268, Kameeldrif East**
**Pretoria, Transvaal Province (ZA)**

(74) Representative : **Muir, Ian R. et al**
**HASELTINE LAKE & CO. Hazlitt House 28**
**Southampton Buildings Chancery Lane**
**London WC2A 1AT (GB)**

(54) **Power pack.**

(57)    A power pack includes a prime mover (10) and power transmission means (14) to transmit power from the prime mover to a load. Energy accumulating means (16) is provided in association with the transmission means and non-rigidly coupled to the prime mover. In order to achieve increased thermal efficiency and lower specific fuel consumption, the prime mover is operated in a narrow operating range regardless of the load requirements. Under low load conditions excess power is absorbed and accumulated in the accumulating means. Under high load conditions, shortfall in power is made up from the accumulating means. The prime mover may be a gas turbine (10) which is drivingly connected to an electrical generator (12), and the accumulating means may be an electrical accumulator (16) such as a battery of electrical cells. The gas turbine and generator are advantageously mounted on a common shaft (26).

EP 0 472 294 A1

THIS INVENTION relates to a power pack utilizing a prime mover and to a method of operating it.

In accordance with the invention, there is provided a method of operating a power pack comprising a prime mover and power transmission means arranged to receive power generated by the prime mover and to transmit power to a load driven by the power pock, the method including operating the prime mover in a desired, preselected narrow operating range by providing energy accumuating means in association with the power transmission means and non-rigidly coupled to the prime mover, and arranging the accumulating means such as to accumulate excess energy when the power generated by the prime mover exceeds the power transmitted by the power transmission means to the load, and such as to expend energy to make up the shortfall when the load requires power in excess of the power generated by the prime mover.

By "non-rigidly" is meant that any instantaneous condition of the accumulating means is not related to or dependant from a correspondingly instantaneous condition (e.g. speed) of the prime mover.

In a preferred embodiment, the prime mover may be a gas turbine, the gas turbine being drivingly connected to electrical power generating means, e.g. a generator, and the accumulating means being electrical power accumulating means or an electrical accumulator, e.g. a battery of electro-chemical cells.

The method may advantageously include starting the gas turbine by using the eletrical power generating means, i.e. the generator, as a starter motor and driving it from the electrical accumulator during start-up.

Instead, the method may include starting the gas turbine by impinging compressed air onto blades of a rotor of the gas turbine. The method may include supplying the compressed air from an accumulator, the method including, in operation, charging the accumulator by bleeding off air from a compressor of the gas turbine. Instead, the accumulator may be charged from an external source.

The method may preferably include driving the electrical power generating means directly from the gas turbine by having the electrical power generating means in the form of a generator and by mounting the gas turbine and the generator on a common shaft. The method may further include driving a directly coupled fuel pump mounted on said common shaft.

The method may include controlling operation of the gas turbine by means of a micro-processor control. Similarly, the method may include controlling operation of the power transmission means by means of a micro-processor control which may conveniently be integrated with that of the gas turbine.

By way of development, the method may include increasing the overall thermal efficiency of the gas turbine by driving at least one device, adapted to increase such thermal efficiency, by waste heat of exhaust gases of the gas turbine, said at least one device being selected from the group consisting of

a regenerator or recuperator to return some of the heat energy that would normally be lost with exhaust gases to the front of the combustion chamber; and

a catalytic reactor for fuel to enhance the state or condition of the fuel for combustion.

Utilizing such regenerator or recuperator has the advantage that less fuel needs to be added to reach the turbine limiting temperatures, resulting in higher thermal efficiency and lower specific fuel consumption.

Such catalytic reactor may be followed by regenerative heaters. Enhancing the state or condition of the fuel for combustion, may include dissociating the fuel.

The invention extends to a power pack including

a prime mover;

power transmission means arranged to receive power generated by the prime mover in use and to transmit power to a load driven by the power pack in use; and

energy accumulating means in association with the power transmission means, the energy accumulating means being non-rigidly coupled to the prime mover and being arranged in use to accumulate excess energy when the power generated by the power prime mover exceeds the power transmitted by the power transmission means to the load, and to expend energy to make up the shortfall when the load requires power in excess of the power generated by the prime mover.

In a preferred embodiment, the prime mover may be in the form of a gas turbine, and the gas turbine may be coupled to electrical power generating means, the accumulating means then being electrical power accumulating means or an electrical accumulator. Advantageously, the electrical power generating means may be in the form of a generator and the electrical power accumulating means may be in the form of a battery of electrochemical cells.

The gas turbine and the generator may be directly drivingly connected by having them mounted on a common shaft. The power pack may include a fuel pump which is directly coupled to the gas turbine, by having it mounted on said common shaft.

Advantageously the generator may be adapted to operate as a starter motor for the gas turbine, the battery of chemical cells being connected or connectable to the generator to power the generator when operating as a starter motor.

Instead, the power pack may comprise starting means including a source of compressed air and means for impinging compressed air onto blades of a rotor of the gas turbine. The source of compressed air may be in the form of an accumulator arranged to be charged from compressed air bled off from a compressor of the gas turbine during operation. Instead, it may be charged from an external source.

The power pack may include a micro-processor control for controlling operation of the gas turbine. The power pack may include a further micro-processor control, integrated with that of the gas turbine, for controlling operation of the power transmission means.

By way of development, the power pack may include at least one device adapted to increase the overall thermal efficiency of the gas turbine, said at least one device being arranged to be driven by or to utilize waste heat of exhaust gases of the turbine, said at least one device being selected from the group consisting of

a regenerator or recuperator arranged to return of the heat energy that would normally be lost with exhaust gases to the front of the combustion chamber; and

a catalytic reactor for fuel of the gas turbine, adapted to enhance the state or condition of the fuel for combustion.

Those have the advantages mentioned above.

Advantageously, the kind of heat exchanger that may be used is one that is based on heat pipes. The heat pipe is a device that allows the transfer of very substantial quantities of heat through small surface areas. In its simplest form the heat pipe possesses the property of extremely high thermal conductance. As a result of this high conductance, the heat pipe can producce nearly isothermal conditions.

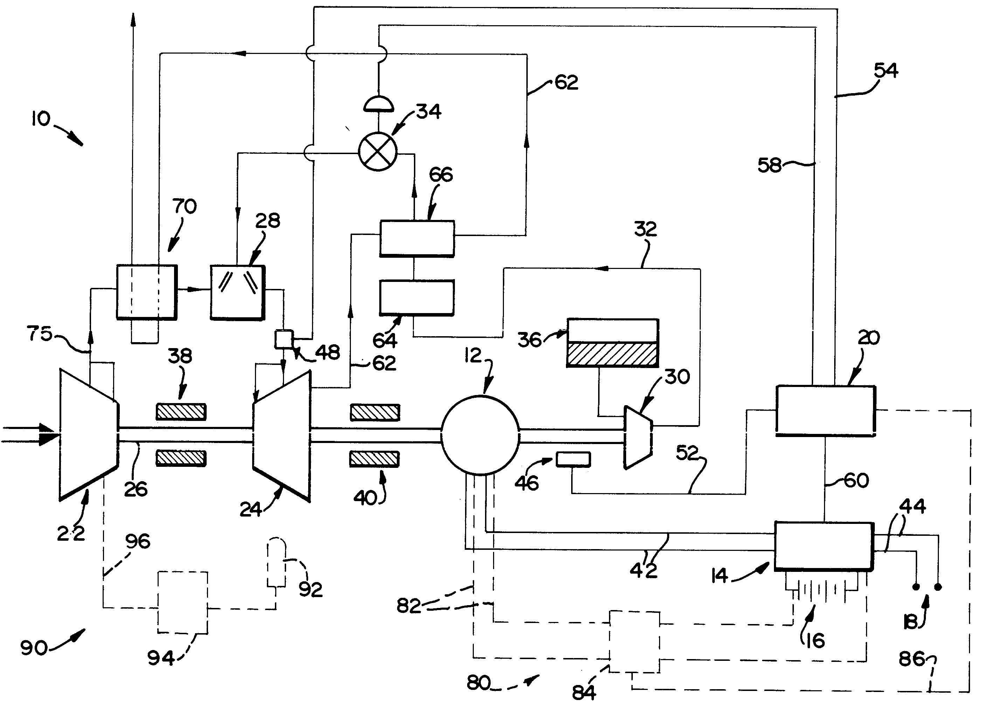

The invention is now described by way of example with reference to the accompanying schematic lay-out. The single figure shows a power pack in accordance with the invention.

With reference to the schematic lay-out, the power pack in accordance with the invention includes a gas turbine generally indicated by reference numeral 10 which drives an electrical generator generally indicated by reference numeral 12. The generator 12 supplies electrical power to power transmission means 14 having an electrical output represented by load connectors 18.

Thus, briefly, the gas turbine 10 will in use generate power to drive the generator 12 which in turn generates electrical energy. The electrical energy is transmitted to the power transmission means 14 which in turn transmits the electrical power to a load connected to the load connectors 18.

In accordance with the invention, there is provided an accumulator 16 in association with the power transmission means 14 and such as to be non-rigidly coupled to the gas turbine 10. The accumuator 16 is arranged to accumulate excess energy when the load requires less power than what is generated by the generator 12; and to expend energy to make up the shortfall when the load requirement is in excess of the electrical power generated by the generator 12. The object of this arrangement is to ensure, within narrow limits, a constant load on the gas turbine 10 to allow the gas turbine to operate within a preselected, narrow operating range. The operating range may, for example, be selected for maximum efficiency. The significance of this will be explained hereinafter.

Operation of the gas turbine 10 within said narrow operating range is controlled by means of a micro-processor generally indicated by reference numeral 20. The micro-processor 20 also controls operation of the power transmission means 14.

The gas turbine 10 comprises a compressor 22, and a turbine 24 advantageously mounted on a common shaft 26. It further comprises a combustor generally indicated by reference numeral 28. Fuel is supplied to the combustor 28 from a fuel tank 36 by means of a fuel pump 30 via a fuel line 32. The fuel pump 30 is advantageously a high speed fuel pump and is mounted on the common shaft 26.

The shaft 26 is supported for rotation in bearings schematically indicated by reference numerals 38 and 40. The Applicant believes that the bearings 38, 40 may advantageously be in the form of air bearings e.g. hydrostatic or hydrodynamic air bearings.

Advantageously, also the generator 12 is mounted on the common shaft 26. It is to be appreciated that this dictates that the generator 12 rotates at the same (high) speed as the gas turbine 10.

Electrical power generated by the generator 12 is conducted by means of electrical conductors 42 to the power transmission means 14 and thence to the load connectors 18 via electrical conductors 44.

The power transmission means 14 is preferably in the form of solid state power transmission means.

The accumulator 16 is advantageously in the form of a battery of electrochemical cells.

The micro-processsor 20 is fed with input signals as required. For example, a speed sensor 46 associated with the shaft 26 feeds a speed input signal via an input line 52 to the micro-processor 20. Turbine inlet temperature is sensed by a temperature transducer 48 and the signal is fed into the micro-processor 20 via an input line 54. The temperature transducer 48 is immediaately upstream of the turbine 24. Further input signals e.g. in respect of requirements of the load are, for clarity of drawing, not shown but are also fed to the micro-processor 20.

The micro-processor 20 controls operation of the gas turbine 10, for example, by controlling the supply of fuel to the combustor 28 by means of an output signal conducted via an output line 58 to a fuel control valve generally indicated by reference numeral 34 upstream of the combustor 28.

Similarly, operation of the power transmission means 14 is controlled by the micro-processor 20 by means of a control signal conducted to the power transmission means via an output line 60.

Other control functions, as required, will be effected also by the micro-processor 20.

By way of development, the power pack comprises a catalytic reactor 64, and a recuperator 66. The catalytic reactor 64 and recuperator 66 are operatively provided in the fuel line 32 to be driven by means of waste heat of the gas turbine 10. Thus exhaust gas ducting 62 of the gas turbine 10 is arranged in a heat exchange relationship with the catalytic reactor 64 and regenerator 64.

Fuel is treated in the catalytic reactor 64 and recuperator 66 to ameliorate its condition or state e.g. to heat it.

A further heat exchanger 70 is arranged between the compressor 22 and the combustor 28. The heat exchanger or recuperator 70 is driven by waste heat of the turbine 10 to add energy to the compressed air prior to combustion in the combustor 28.

By way of development, in one embodiment, starting means shown schematically in dotted and indicated generally by reference numeral 80 may be employed to start the gas turbine 10. The starting means 80 comprises electrical conductors 82 interconnecting the generator 12 with the accumulator 16 via a starting control 84 controlled via a control output from the micro-processor 20. The generator 12 is adapted to act as a motor and, when selectively powered from the accumulator 16, it acts as a starter motor for the gas turbine 10.

In another embodiment, instead of the starting means 80, starting means shown in dotted and indicated by reference numeral 90 may be employed. The starting means 90 comprises an accumulator 94 of compressed air operatively connected to an injector 92 by means of which compressed air can selectively be impinged on blades of the turbine 24 to turn it and thus to start the gas turbine 10. The accumulator 94 may be charged by bleeding compressed air from the compressor 22 via a charge line 96 to the accumulator 94. Instead, the accumulator 94 may be charged from an external source.

The Applicant believes that a power pack of the kind described must comply with a number of requirements to be technically and commercially sucesssful. The power pack must be compact, of small mass, reliable, must be able to operate on a variety of fuels, and must be environment friendly. Furthermore, it must have a high efficiency and must be economical to manufacture, operate and maintain.

## Simplicity

The system will have a single rotating component which can be accurately balanced, giving very low vibration levels. Providing air bearings for this rotating component will eliminate the need for a lubrication system.

## Compactness and Low Mass

It is well known and generally accepted that a gas turbine has exceptionally beneficial power to mass and power to volume characteristics. A power pack in accordance with the invention will thus share in this advantage by utilizing a gas turbine as its prime mover.

Furthermore, the Applicant believes that a high speed generator (50 000 r.p.m. to 100 000 r.p.m. are envisaged as typical operating speeds for smaller applications) is feasible for direct coupling to the gas turbine, thus eliminating any change speed device. This will enhance the characteristics of low mass and low volume.

It is also significant that the generator may be used also as a starter motor, thus enhancing the mentioned advantages. Compressed air may, instead, be used to star the gas turbine.

It is to be appreciated that the gas turbine does not require a wet cooling system. This greatly enhances the abovenamed advantages.

These advantages are expected to be particularly important in mobile applications, e.g. road vehicles, where acceleration/deceleration takes place frequently. In this regard, the extrapolation or snowballing effect of heavy or bulky engine/transmission systems on chassis/body design of a vehicle, and the corresponding disproportionately high advantages when light mass/low volume systems are used, must be borne in mind.

## Low Maintenance

Because of mechanical simplicity as a result of having only a single rotating component, rich is rotatably supported in air bearings, operating the power pack without any gear box, and the like, maintenance actions are drastically reduced. For large production volumes the unit cost could be so low that the gas turbine part of the system may be treated as a disposable unit.

## Reliability

The simplicity of the gas turbine engine is inherently conducive to reliability. Operation in a narrow operating range further enhances the reliability of the gas turbine. The reliability of electrical and electronic components is generally well established and accepted. The scarcity of moving components in the power pack is a good indication of its potential for reliability.

## Variety of Fuels

Piston engines, which currently dominate the prime mover market, are heavily restricted to the use of fossil fuels. It is an important advantage that a gas turbine is exceptionally versatile in respect of its fuel requirements. The Applicant believes that this inherent capability is derived from the fact that a gas turbine operates on a continuous combustion basis in contrast to intermittent combustion in piston engines. The fuel supply system may include off the shelf components, thus reducing cost.

## Environment Friendliness

The continuous combustion process of the gas turbine, in combination with the stable operating conditions in the narrow operating range, allow the combustion process to be easily and effectively controlled in in respect of unburnt fuel as well as the formation of pollutants such as NOx and SOx. The basic noise generated by the system will be of a high frequency and hence damping will be much easier than for the low frequency basic noise generated by piston engines.

## General

A gas turbine has a number of inherent advantages which are merely mentioned as they should be well understood, namely that it has large potential for the use of esoteric materials and composites which can greatly enhance its performance and reliability; beneficial vibrational characteristics; potential for lowering of noise levels; wide range of capacities utilizing similar basic technologies (it is envisaged that power packs from about 5 kilowatt to about 1,5 megawatt will utilize single stage, radial flow compressors and turbines); and the like.

## Efficiency

Gas turbines are inefficient during off design point operation. The Applicant believes that a very important, even major, contribution of this invention relates to the alleviating of this problem. The invention teaches operating the gas turbine at or near its design point practically constantly, regardless of the prevailing load requirements. This allows the gas turbine to be used at or close to maximum efficiency. It has the further advantage that capacity of the gas turbine is dictated by its average duty and not by its maximum duty.

The thermal efficiency of the power pack can be further improved by isothermal compression in the compressor and isothermal expansion in the turbine, possibly by re-heating.

## Cost of Manufacture and Operation

The Applicant believes that the inherent disadvantage of gas turbines in respect of off design point efficiency has been a serious factor, even the major factor, in preventing the gas turbine from being much more widely used as a prime mover. Thus, gas turbines have, to a large extent, been produced in small quantities, in tailor made format, for a limited number of (esoteric) applications.

In greatly alleviating this inherent disadvantage, this invention allows the inherent advantages of gas turbines to be utilized. This is expected greatly to improve wide acceptance of gas turbines as prime movers, thus allowing gas turbines to be manufactured in large quantities which should in turn drastically lower the cost of manufacture.

Simultaneously, cost of maintenance should likewise drastically decrease.

On account of its expected high efficiency, the operation costs of gas turbines, when operated in accordance with this invention, are expected to be competitive with those of other prime movers.

**Claims**

1. A method of operating a power pack comprising a prime mover (10) and power transmission means (14) arranged to receive power generated by the prime mover (10) and to transmit power to a load driven by the power pack, characterized by operating the prime mover (10) in a desired, preselected narrow operating range by providing energy accumulating means (16) in association with the power transmission means (14) and non-rigidly coupled to the prime mover, and arranging the accumuating means (16) such as to accumulate excess energy when the power generated by the prime mover (10) exceeds the power transmitted by the power transmission means (14) to the load, and such as to expend energy to make up the shortfall when the load requires power in excess of the power generated by the prime mover (10).

2. A method as claim in Claim 1 characterized in that the prime mover (10) is a gas turbine, the gas turbine being drivingly connected to electrical power generating means (12), and the accumulating means (16) being electrical power accumulating means or an electrical accumulator.

3. A method as claim in Claim 2 characterized in that starting the gas turbine (10) is effected by using the electrical power generating means (12) as a starter motor and driving it from the electrical accumulator (16) during start-up.

4. A method as claimed in Claim 2 characterized in that starting the gas turbine (10) is effected by impinging compressed air onto blades of a rotor (24) of the gas turbine (10).

5. A method as claimed in Claim 4 characterized in that the compressed air is supplied from an accumulator (94) and by charging the accumulator (94) in operation by bleeding off air from a compressor (22) of the gas turbine (10).

6. A method as claimed in any one of Claim 2 to Claim 5 inclusive characterized in that driving the electrical power generating means (12) is effected directly from the gas turbine (10) by having the electrical power generating means (12) in the form of a generator and by mounting the gas turbine (10) and the generator (12) on a common shaft (26).

7. A method as claimed in Claim 6 characterized by supplying fuel to a combustion chamber (28) from a fuel pump (30) mounted on said common shaft (26) to be diectly coupled to the gas turbine (10).

8. A method as claimed in any one of Claim 2 to Claim 7 inclusive characterized in that operation of the gas turbine ( 10) is controlled by means of a micro-processssor control (20).

9. A method as claimed in Claim 8 characterized in that operation of the power transmission means (14) is controlled by means of a micro-processssor (20) control which is integrated with that of the gas turbine (10).

10. A method as claimed in any one of Claim 2 to Claim 9 inclusive characterized in that the overall thermal efficiency of the gas turbine (10) is increased by driving at least one device (64, 66, 70), adapted to increase such thermal efficiency, by waste heat of exhaust gases of the gas turbine ( 10) , said at least one device (64, 66, 70) being selected from the group consisting of
    a regenerator or recuperator (70) to return some of the heat energy that would normally be lost with exhaust gases to the front of the combustion chamber (28); and
    a catalytic reactor (64 ) for fuel to enhance the state or condition of the fuel for combustion in combination with a heat exchanger or recuperator (66).

11. A power pack including
    a prime mover (10) ; and
    power transmission means (14) arranged to receive power generated by the prime mover (10) in use and to transmit power to a load driven by the power pack in use;
    characterized in that
    energy accumulating means (16) is provided in association with the power transmission means (14) , the energy accumulating means (16) being non-rigidly coupled to the prime mover (10) and being arranged in use to accumulate excess energy when the power generated by the power prime mover (10) exceeds the power transmitted by the power transmission means (14) to the load, and to expend to make up the shortfall when the load requires power in excess of the power generated by the prime mover (10).

12. A power pack as claimed in Claim 11 characterized in that the prime mover (10) is in the form of a gas turbine (10), in that the gas turbine (10) is coupled to electrical power generating means (12), and in that the accumulating means (16) is electrical power accumulating means or an electrical accumulator.

13. A power pack as claimed in Claim 12 characterized in that the electrical power generating means is in the form of a generator (12) and in that the electrical power accumulating means (16) is in the form of a battery (16) of electrical cells.

14. A power pack as claimed in Claim 13 characterized in that the gas turbine (10) and the generator (12) are directly drivingly connected by having them mounted on a common shaft (26).

15. A power pack as claimed in Claim 13 or Claim 14 characterized in that the generator (12) is adapted to operate as a starter motor for the gas turbine (10), and in that the battery (16) of chemical cells is connected or is connectable to the generator (12) to power the generator (12) when operating as a starter motor.

16. A power pack as claimed in Claim 12, Claim 13 or Claim 14 characterized in that it comprises starting means including a source (94) of compressed air and means (92) for impinging compressed air onto blades of a rotor (24) of the gas turbine (10).

17. A power pack as claimed in Claim 16 characterized in that the source (94) of compressed air is in the form of an accumulator (94) arranged to be charged from compressed air bled off from a compressor (22) of the gas turbine (10) during operation.

18. A power pack as claimed in Claim 14 characterized in that it includes a fuel pump (30) which is directly poled to the gas turbine (10), by having it mounted on said common shaft (26).

19. A power pack as claimed in any one of Claim 12 to Claim 18 inclusive characterized in that it includes a micro-processor control (20) for controlling operation of the gas turbine (10).

20. A power pack as claimed in Claim 19 characterized in that it includes a micro-processsor control (20), integrated with that of the gas turbine ( 10), for controlling operation of the power transmission means (14).

21. A power pack as claimed in any one of Claim 12 to Claim 20 inclusive characterized in that it includes at least one device (64, 66, 70) adapted to increase the overall thermal efficiency of the gas turbine (10), said at least one device (64, 66, 70) being arranged to be driven by or to utilize waste heat of exhaust gases of the turbine (24), said at least one device (64, 66, 70) being selected from the group consisting of

a regenerator or recuperator (70) arranged to return some of the heat energy that would normally be lost with exhaust gases to the front of the combustion chamber (28); and

a catalytic reactor (64) for fuel of the gas turbine (10), adapted to enhance the state or condition of the fuel for combustion, and being arranged in operative co-operation with a heat exchanger or recuperator (66).

EP 0 472 294 A1

European Patent Office

**EUROPEAN SEARCH REPORT**

Application Number

EP 91 30 6754

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-1 581 049 (HINE ET AL.) | 1,6,11 | H02J7/32 |
| A | * the whole document * | 2,12,13 | |
| | --- | | |
| Y | ERICSSON REVIEW.<br>vol. 60, no. 3, 1983, STOCKHOLM SE<br>pages 159 - 163;<br>ERIKSSON ET AL.: 'optimizing the power from a<br>wind turbine' | 1,6,11 | |
| A | * the whole document * | 8,9,13,<br>19,20 | |
| | --- | | |
| A | INTELEC 87<br>14 June 1987, STOCKHOLM<br>pages 424 - 429;<br>B.MARCUSSEN: 'the gas turbine as a prime mover<br>for standby power applications'<br>* the whole document * | 1,2,4,6,<br>7,10-14,<br>16,18,21 | |
| | --- | | |
| A | FR-A-2 278 043 (SERAIS ENGINEERING) | 1,2,4,6,<br>10-12,21 | |
| | * page 1, line 1 - page 4, line 30; figures 1,2 * | | TECHNICAL FIELDS SEARCHED (Int. Cl.5) |
| | --- | | |
| A | FR-A-1 453 862 (TOESCA) | 1-3,6,<br>11-15 | H02J<br>F02C |
| | * page 1, line 1 - page 3, line 52; figures 1-3 * | | |
| | --- | | |
| A | EP-A-0 225 868 (ROOLS-ROYCE) | | |
| | ----- | | |

The present search report has been drawn up for all claims

| Place of search | Date of completion of the search | Examiner |
|---|---|---|
| THE HAGUE | 10 DECEMBER 1991 | CALARASANU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P0401)

10